# EUROPÄISCHE PATENTSCHRIFT

(11) **EP 1 568 459 B1**
(45) Veröffentlichungstag und Bekanntmachung des Hinweises auf die Patenterteilung: **15.08.2007**
(21) Anmeldenummer: 04004275.6
(22) Anmeldetag: 25.02.2004
(51) Int. Cl.: B29C 45/14

(54) **Verfahren zur Herstellung von Behälterdeckeln**
Method of manufacturing container lids
Procédé de fabrication des couvercles de récipients

(43) Veröffentlichungstag der Anmeldung: 31.08.2005
(73) Patentinhaber: ARTA PLAST AB, 135 48 Tyresö (SE)
(72) Erfinder: Steg, Henning, 13550 Tyresö (SE)
(74) Vertreter: Niedmers, Ole

(56) Entgegenhaltungen:
- CH-A- 638 718
- DE-A- 10 104 554
- DE-C- 757 045
- DE-C- 19 740 468
- DE-U- 20 209 535
- FR-A- 1 116 870
- GB-A- 2 227 481
- US-A- 4 695 420
- GRANDE J A: "PC FILM INSERT ENHANCES READABILITY OF INSTRUMENTS" MODERN PLASTICS INTERNATIONAL, MCGRAW-HILL,INC. LAUSANNE, CH, Bd. 28, Nr. 11, November 1998 (1998-11), Seite 30,32, XP000958033 ISSN: 0026-8283
- PATENT ABSTRACTS OF JAPAN Bd. 2002, Nr. 07, 3. Juli 2002 (2002-07-03) -& JP 2002 067078 A (TOYOTA AUTO BODY CO LTD; SUMITOMO CHEM CO LTD), 5. März 2002 (2002-03-05)
- PATENT ABSTRACTS OF JAPAN Bd. 2000, Nr. 14, 5. März 2001 (2001-03-05) & JP 2000 309033 A (DAINIPPON PRINTING CO LTD), 7. November 2000 (2000-11-07)
- PATENT ABSTRACTS OF JAPAN Bd. 2000, Nr. 17, 5. Juni 2001 (2001-06-05) & JP 2 185419 A (CERBO:AB), 19. Juli 1990 (1990-07-19)
- MICHAELI W ET AL: "FLEXIBLE OBERFLAECHENGESTALTUNG DURCH DEKORFOLIEN WLECHE KRITERIEN DIE FORMTEILQUALITAET BEIM FOLIENHITERSPRITZEN BEEINFLUSSEN" KUNSTSTOFFE, CARL HANSER VERLAG. MUNCHEN, DE, Bd. 92, Nr. 4, April 2002 (2002-04), Seiten 70-72,74, XP001085545 ISSN: 0023-5563

## Beschreibung

Verfahren zur Herstellung von insbesondere als Behälterdeckel fungierenden Behälteroberteilen von Behältern für feste, pastöse sowie fließ- und schüttfähige Produkte, insbesondere für Lebensmittelprodukte, wobei auf dem Behälteroberteil eine Folie angebracht ist und wobei wenigstens das Behälteroberteil aus einem Kunststoffwerkstoff besteht.

Ein Verfahren dieser Art ist bekannt (DE-C-197 40 468). Bei dem bekannten Verfahren wird die Folie vor dem Einspritzen der Kunststoffschmelze in eine Spritzgußform außerhalb der Spritzgußform erwärmt, zur Spritzgußform transportiert, dann in die Spritzgußform eingelegt, wobei daraufhin die Kunststoffschmelze in die Spritzgußform eingespritzt wird. Die in die Spritzgußform eingelegte Folie weist vor Ausführung des Spritzgußvorganges eine undefinierte Temperatur relativ zur Temperatur des in der Spritzgußform auf die Folie aufgespritzten Kunststoffwerkstoffs auf. Die Erwärmung der Folie außerhalb des eigentlichen Spritzgußwerkzeugs erfolgt mittels au-βerhalb des Spritzgußwerkzeugs angeordneten Heizelementen.

Aus der DE-U-202 09 535 ist eine Vorrichtung (Inmold-Labeling-Maschine) bekannt, bei der ein Etikett in ein Formwerkzeug eingelegt wird, wobei anschließend auf das Etikett Kunststoffwerkstoff gespritzt wird, woraus sich dann eine endgültige Form eines herzustellenden Deckels für einen Behälter ergibt.

In der europäischen Patentanmeldung gem. der EP-A-1 475 314 wird ein Behälter beschrieben, der für die Aufnahme fester, pastöser sowie fließ- und schüttfähiger Produkte, insbesondere für Lebensmittelprodukte, dient. Dieser Behälter umfaßt ein Behälterunterteil zur Aufnahme des Produkts sowie ein als Behälterdeckel ausgebildetes Behälteroberteil. Auf dem Behälteroberteil ist eine Folie angebracht, die von außen sichtbar ist, wobei die Folie mit Text- und/oder Bildinformationen versehen ist, die dem Verbraucher Informationen über den Behälterinhalt und ggf. Anweisungen über den Gebrauch des Behälterinhalts geben. Derartige Folien, auch als Etikett bezeichnet, werden an Behältern, insbesondere aber auch an den Kunststoffbehältern der vorbeschriebenen Art, angebracht und sind seit langem im Stand der Technik bekannt.

Allgemein gilt, daß derartige Folien, die vielfach aus Polypropylen bestehen, nachdem sie mit den besagten Texten und/oder Bildern bedruckt worden sind, mit den entsprechenden Behälterteilen, auf denen sie angebracht bzw. mit denen sie verbunden werden sollen, mittels des sogen. "In Mold Labeling", auch kurz IML-Verbindungstechnik genannt, verbunden werden. Diese bekannte Verbindungstechnik nutzt den Umstand aus, daß dann, wenn der Untergrund, bspw. ein Behälterteil, auf dem die Folie aufgebracht werden soll, sich im plastifizierten Zustand befindet, d.h. unmittelbar in der Spritzgußform, in die der behälterbildende Werkstoff eingespritzt wird, plastifiziert ist und die ebenfalls an geeigneter Stelle in der Spritzgußform eingebrachte Folie mit dem eingespritzten, plastifizierten Behälterwerkstoff in Kontakt gebracht wird. Im Zuge des Abkühlens und Festwerdens des behälterbildenden Werkstoffs, um bei diesem Beispiel zu bleiben, bildet sich eine sehr haltbare Verbindung zwischen der Folie und dem Behälterteil.

Werden beispielsweise Behälterdeckel mit einer Folie versehen, neigen die Behälterdeckel, die regelmäßig eine sehr viel größere Dimension in der Fläche als in der Dicke aufweisen, selbst wenn diese Verstärkungsstrukturen aufweisen, dazu, wenn bspw. ein derartiger Behälterdeckel aus Kunststoff gespritzt wird und dabei mittels der IML-Technik eine Folie aufgebracht wird, sich in mehreren Freiheitsgraden zu wölben.

Das hat seinen Grund im wesentlichen darin, daß normalerweise die Spritzgußform, in die die Folie eingelegt wird, auf bedeutend niedrigerer Temperatur gehalten wird als die den Behälterdeckel bildende Kunststoffschmelze. Dabei wirkt die in die Spritzgußform und gegen die feste Seite der Spritzgußform durch die Schmelze gedrückte Folie zusätzlich noch als Wärmeisolator.

Ist der Spritzgußvorgang abgeschlossen, die Folie verbindet sich im oberflächennahen Bereich mit dem Werkstoff des gespritzten Behälterdeckels, findet eine Abkühlung statt. Vielfach ist zudem der Werkstoff, der die Folie bildet, ein anderer als der Werkstoff, der den Deckel bildet. Aufgrund des unterschiedlichen Verlaufes der Abkühlung sowohl des Deckels als auch der Folie entsteht eine Spannung zwischen dem Deckel und der Folie, so daß sich der Deckel, wenn beide miteinander verbundenen Elemente abgekühlt sind, in mehreren Freiheitsgraden wölbt, d.h. regelmäßig wölbt sich der Deckel konkav gegenüber der Folie.

Es ist verfahrenstechnisch äußerst problematisch, derartige bisweilen sogar in mehreren Freiheitsgraden gekrümmte Verbünde aus Deckel und Folie in einem vollautomatisierten Herstellungsprozeß zu verwenden, d.h. auf die mit dem gewünschten Produkt gefüllten Behälter aufzubringen und den Behälter dann mit einem derart verformten Behälterdeckel hermetisch, d.h. luftdicht und gegen sonstige äußere Einflüsse zu verbinden.

Insbesondere beim Einsatz derartiger Deckel aus Verbünden von Folie und Deckeloberteil für zu verschließende Behälter mit leicht verderblicher Ware, bspw. Lebensmitteln, ist ein hermetischer Verschluß zwischen dem das Behälteroberteil bildenden Deckel und dem Behälterunterteil, d.h. dem eigentlichen Behälter, in dem das Füllgut eingebracht wird, unabdingbar, um eine keimfreie Aufbewahrung des Füllguts im verschlossenen Behälter sicherzustellen.

Die bisweilen in mehreren Freiheitsgraden gekrümmten Deckel sind nach ihrer Herstellung bzw. Verbindung mit der Folie nur unter sehr aufwendigen vorrichtungsseitigen und verfahrenstechnischen Maßnahmen sowohl bei der Handhabung eines Deckels aus derartigen Verbünden, wie sie beschrieben sind, als auch mit dem Behälter zu seinem Verschließen verbindbar, und es müssen aufwendige Maßnahmen getroffen werden, um derartige, in mehreren Freiheitsgraden gewölbte Deckel genau auf dem Behälter zu seinem Verschließen zu positionieren und in dieser Position zu erhalten, bis der Verschließvorgang abgeschlossen ist. In einer vollautomatisierten Herstellungs- bzw. Verschließanordnung muß immer angestrebt sein, daß die Deckel, wenn sie auf den Behälter zum Verschließen des Behälters positioniert werden, sich in der darauf aufgelegten Position halten, um die Ausbildung von Fehlverbindungen auszuschließen und einen Ausschuß in minimalen Grenzen zu halten. Dieses ist bei dem bisher dafür bereitgestellten Verfahren nicht in der Weise garantiert, wie es aus verfahrenstechnischen, herstellungstechnischen und hygienischen Gesichtspunkten anzustreben ist.

Es ist somit Aufgabe der vorliegenden Erfindung, ein Verfahren zur Herstellung von Behälterdeckeln der eingangs genannten Art zu schaffen, die aus einem eigentlichen Behälterdeckel, der ein Behälteroberteil bildet, und einer auf dem Deckel aufgebrachten Folie bestehen, nach ihrer Verbindung dennoch plan sind, so daß die Bevorratung der derart hergestellten Verbünde aus Deckelelement und Folie mit einfachen Mitteln erreichbar ist und auch ein Verschluß derart ausgebildeter Verbünde mit dem eigentlichen Behälter einen hermetisch dichten Verschluß zwischen Deckel bzw. Behälteroberteil und Behälterunterteil 1 ermöglicht, der zudem verfahrenstechnisch einfach realisiert werden kann und einfach beherrschbar ist, so daß sowohl das Verfahren zur Herstellung des Behälteroberteiles bzw. Deckels als auch ein Verschließen eines Behälters mit einem derartigen Deckel auf verfahrenstechnisch einfache Weise möglich ist.

Gelöst wird die Aufgabe gem. der Erfindung dadurch, daß die Folie beim Positionieren in der Spritzgußform derart temperiert ist, daß der Temperaturgradient zwischen dem Kunststoffwerkstoff des Behälteroberteils und der Folie in der Spritzgußform minimiert gehalten wird.

Die Temperierung erfolgt dabei derart, daß unter Berücksichtigung des temperaturabhängigen Ausdehnungskoeffizienten des die Folie bildenden Werkstoffs und des temperaturabhängigen Ausdehnungskoeffizienten des das eigentliche Behälteroberteil bzw. den Deckel bildenden Spritzgußwerkstoffs angepaßt wird und die Temperatur der Folie an die Temperatur des plastifizierten Spritzgußwerkstoffs, der das Behälteroberteil bzw. den Deckel in der Spritzgußform bildet, in den die Folie eingelegt ist, angepaßt ist.

Dadurch wird zudem auch ein besseres Fließverhalten des in die Spritzgußform eingespritzten Werkstoffs, das das Behälteroberteil bzw. den Deckel bildet, gewährleistet, da die Folie nicht mehr, wie bisher, einen "kälteren" Isolator bildet, sondern die Folie in einem höheren Temperaturbereich gehalten wird, so daß die Temperaturdifferenz zwischen der Folie und dem Kunststoffwerkstoff, der den Deckel bildet, nicht mehr so groß ist wie bei dem Stand der Technik bekannten Verfahren.

Die lösungsgemäße Maßnahme hat zudem auch noch den Vorteil, daß dadurch die eigentliche Verbindung, d.h. die Haftung, zwischen Deckel und Folie verbessert wird. Bei der Abkühlung des Verbundes aus Deckel und Folie nach der Herstellung schrumpft der Deckel und die damit verbundene Folie quasi synchron mit der Folge, daß der Dekkel und die Folie nach ihrer Abkühlung auf Umgebungstemperatur quasi ein planes Gebilde bzw. einen planen Verbund bilden.

Die erfindungsgemäße Lösung hat sich in der praktischen Erprobung als den Erwartungen in vollem Umfange entsprechend herausgestellt.

Bei einer weiteren vorteilhaften Ausführungsform des Verfahrens wird die Folie bei ihrer Überführung vom Ort ihrer Bevorratung und/oder Herstellung in den Positionierungsort in der Spritzgußform schon temperiert, so daß in der Spritzgußform lediglich eine weitere Temperaturanpassung durch entsprechende Wärmezufuhr oder Wärmeabfuhr auf die gewünschte Temperatur für die Ausbildung des Verbundes zwischen Folie und dem gespritzten Deckelelement in der Spritzgußform zu erfolgen braucht. Durch die Vortemperierung der Folie, bevor sie in die Spritzgußform eingebracht ist, kann diese somit schon ihre temperaturbedingte Form durch entsprechende Vordehnung bekommen.

Bei dem im Stand der Technik bekannten Verfahren wurde, wie eingangs schon angedeutet, die Spritzgußform regelmäßig "gekühlt". Dieser Weg ist erfindungsgemäß bewußt verlassen worden, d.h. die Temperierung erfolgt erfindungsgemäß regelmäßig durch Zufuhr von Wärme, um auch in der Spritzgußform den Temperaturgradienten zwischen dem Spritzgußwerkstoff für den Deckel und der Folie so gering wie möglich zu halten bzw. zu Null gehen zu lassen.

Dazu kann vorzugsweise die Folie auch im Zuge der Ausbildung der Verbindung mit dem Behälteroberteil bzw. dem Deckelelement in der Spritzgußform noch gesondert temperiert werden, bspw. mittels gesonderter Wärmezufuhr zu dem Teil der Spritzgußform, gegen das die Folie bei der Ausbildung des Deckelelements, d.h. beim Einspritzen des das Deckelelement bildenden Kunststoffwerkstoffs gedrückt wird. Das kann bspw. durch elektrische Heizmittel aber auch durch die Zufuhr flüssiger oder gasförmiger Temperierungsmedien erfolgen.

So kann bspw. vorzugsweise die Temperatur der Spritzgußform bei der Ausführung des Spritzgießvorganges des Behälteroberteils und seiner Verbindung mit der Folie im Bereich von 65° C gehalten werden, wenn bspw. der das Behälteroberteil bildende Werkstoff Polypropylen ist. Es sei aber darauf hingewiesen, daß diese Temperatur von 65° C hier nur als beispielhaft angegebener Temperaturbereich zu verstehen ist, der eben auf den Werkstoff Polypropylen abgestimmt ist und somit erheblich höher ist als beispielsweise für dortige im Stand der Technik verwendete Temperaturen, die bisher im Bereich von ca. 10°C liegen. Es versteht sich, daß dann, wenn für die Ausbildung des Behälteroberteilsund/oder auch für die Folie ein anderer Werkstoff als Polypropylen gewählt wird, sich der entsprechende Temperaturbereich ändern kann. Sinnvoll, aber nicht zwingend, ist es, sowohl den den Deckel bildenden Werkstoff als auch den die Folie bildenden Werkstoff gleich zu wählen, bspw. aus Polypropylen oder anderen geeigneten spritzbaren, bedruckbaren oder optisch kennzeichenbaren Werk-stoff auszubilden.

Auch ist es vorteilhaft, die Temperatur einer Handhabe, mittels der die Überführung der Folie in die Spritzgußform bewirkt wird, auf einer Temperatur zu halten, wie sie bspw. in der Spritzgußform für die Folie bereitgestellt bzw. gehalten wird, bspw. im Bereich von 65° C bis 80° C. Mittels dieser Maßnahme hat die Folie schon dann ihre temperaturbedingte Ausdehnung erreicht, wie sie in der Spritzgußform im Bereich der Auflage der Folie angestrebt wird.

Auch bei der Überführung der Folie mit der Handhabe kann diese mittels unterschiedlicher Wärmemittel beaufschlagt werden, bspw. mittels temperierter Luft und/oder mittels elektrischer Wärmemittel.

Die Temperatur des plastifizierten, das Behälteroberteil bildenden Kunststoffwerkstoffs, wird beim Einspritzen in die Spritzgußform vorzugsweise im Bereich von 230 bis 240° C gehalten. Diese Temperatur kann aber in Abhängigkeit des das Behälteroberteil bzw. den Deckel bildenden Werkstoffs und in Abhängigkeit des die Folie bildenden Werkstoffs variieren, wobei die Bereichsangabe 230 bis 240° C sich im wesentlichen auf die Temperatur bezieht, die dann angestrebt wird, wenn die Werkstoffe Polypropylen sind.

Um für einen für den Herstellungsvorgang des Deckels gleichmäßigen Temperaturverlauf der Folie zu sorgen, ist es schließlich von großem Vorteil, den Vorrat an Folien an einem Bevorratungsort, an dem die Folien bereitgestellt werden, selbst wiederum schon zu temperieren, so daß bei der Überführung der Folie bspw. mittels der Handhabe vom Bevorratungsort zum Positionierungsort in der Spritzgußform nur noch soviel Wärme zur Folie zugeführt zu werden braucht bzw. diese nur noch derart temperiert zu werden braucht, daß der Wärmeverlust vom Bevorratungsort zum Positionierungsort in der Spritzgußform ausgeglichen wird. Durch diese Maßnahme können auch die Temperierungsmaßnahmen in der Handhabe verhältnismä-ßig einfach ausgeführt werden, was gleichermaßen auch für die dafür bereitzustellenden Temperaturregelungs- und -steuermaßnahmen gilt.

Das Verfahren kann schließlich vorteilhafterweise derart ausgebildet werden, daß die Folie auf dem Behälteroberteil derart angebracht bzw. derart mit diesem während des erfindungsgemäßen Verfahrens verbunden wird, daß die Folie zum Öffnen des mit dem Behälteroberteil verschlossenen Behälterunterteils vom Behälterunterteil ablösbar ist. D.h., daß bei dieser vorteilhaften Weiterbildung des Verfahrens zum Öffnen des Behälters die Folie zumindest teilweise vom Behälteroberteil bzw. Deckel entfernt werden kann.

Die Erfindung wird nun unter Bezugnahme auf die nachfolgenden schematischen Zeichnungen anhand eines Ausführungsbeispieles im einzelnen beschrieben. Darin zeigen:
- Fig 1.: in der Seitenansicht ein Behälteroberteil, das mittels des Verfahrens hergestellt werden kann,
- Fig. 2: das Behälteroberteil in der Ansicht der Fig. 2 von unten,
- Fig. 3: in perspektivischer Darstellung eine Handhabe mit darauf positionierter Folie gem. den Fig. 1 und 2,
- Fig. 4: eine Darstellung gem. Fig. 3, bei der jedoch die Folie zur Verdeutlichung des Aufbaues der Handhabe lediglich strichpunktiert dargestellt ist,
- Fig. 5: ein Spritzgußformoberteil zur Herstellung des Behälteroberteils bzw. des Behälterdeckels, bestehend aus 4 identischen Spritzgußformbereichen,
- Fig. 6a.: das Spritzgußformoberteil gem. Fig. 5 in der Seitenansicht im Schnitt,
- Fig. 6b.: ein Spritzgußformunterteil im Schnitt, das mit dem Spritzgußformoberteil zusammenwirkt, wobei das Spritzgußformoberteil gem. Fig. 6a. und das Spritzgußformunterteil gem. Fig. 6b. in auseinandergezogener Darstellung gezeigt sind,
- Fig. 7a.: das Spritzgußformoberteil gem. Fig. 6a. und
- Fig. 7b.: das Spritzgußformunterteil gem. Fig. 6b., wobei hier das Spritzgußformoberteil und das Spritzgußformunterteil 1 zur Ausbildung der Behälteroberteile bzw. Verbünde aus jeweiligem Deckelelement und jeweiliger Folie mit in der Spritzgußform positionierten n Folien zusammengefügt sind.

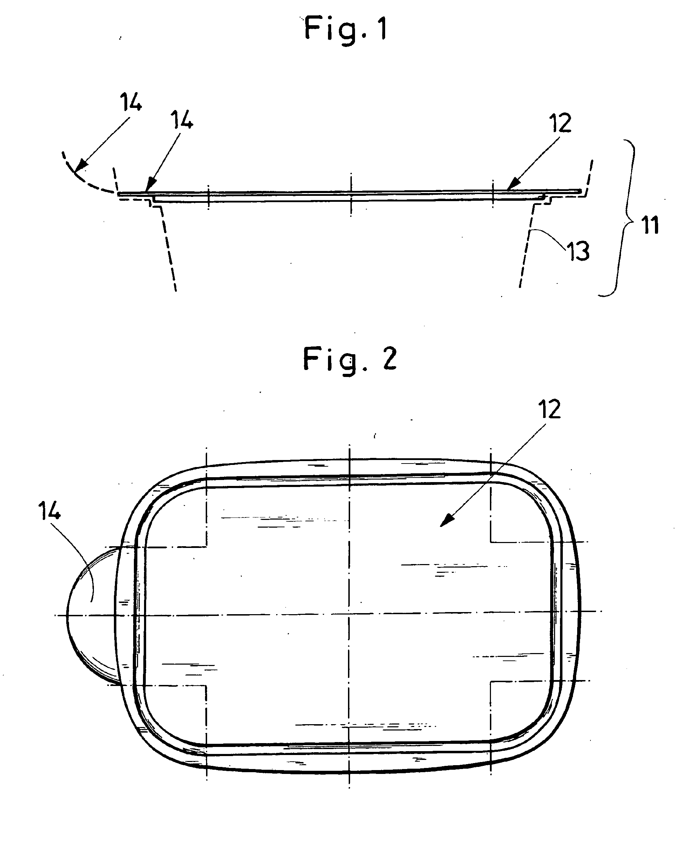

Zunächst wird kurz Bezug genommen auf das mittels des erfindungsgemäßen Verfahrens hergestellte Behälteroberteil bzw. den Behälterdeckel 12, wie er in den Fig. 1 und 2 schematisiert dargestellt ist. Das Behälteroberteil 12 besteht aus einem im wesentlichen flachen Körper aus spritzfähigem Kunststoffwerkstoff, auf den eine Folie 14 aufgebracht ist. Auf der Folie 14 können optisch wahrnehmbare Hinweise angebracht sein, bspw. Bilder und/oder Schrift, um einem Benutzer eines mit dem erfindungsgemäßen Behälteroberteil 12 verschlossenen Behälters 11, der in Fig. 1 lediglich schematisch gestrichelt angedeutet ist, Informationen über den Inhalt zu vermitteln. Regelmäßig besteht das Behälteroberteil 12 und die Folie 14 aus dem gleichen Kunststoffwerkstoff, bspw. Polypropylen. Der das Behälteroberteil 12 und das Behälterunterteil 13 bildende Kunststoffwerkstoff kann aber auch unterschiedlich sein.

Bezüglich der Art des Aufbaues des Behälters 11, d.h. des Behälteroberteils 12 und des Behälterunterteils13, wird auf die unveröffentlichte europäische Patentanmeldung Nr. 03 010 270.1 verwiesen.

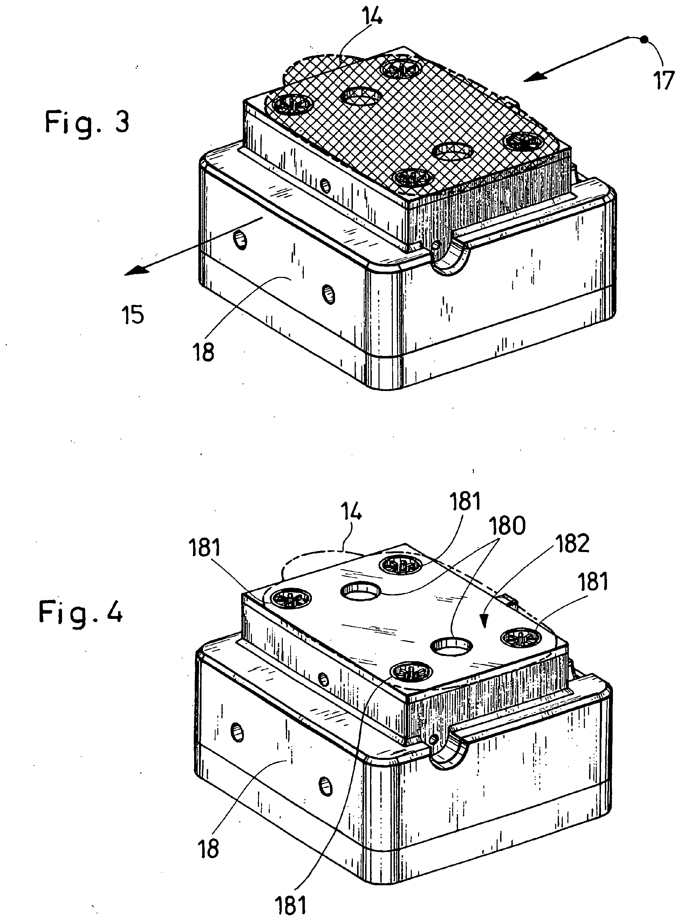

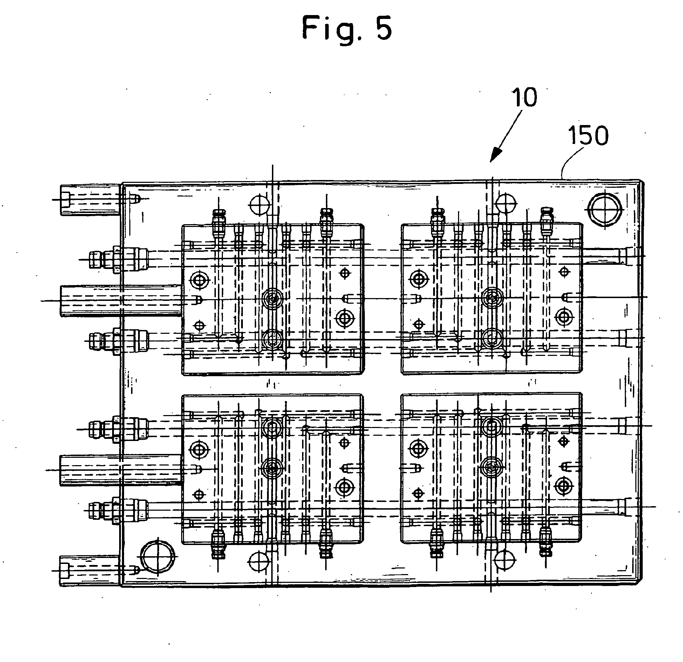

Das erfindungsgemäße Verfahren zur Herstellung von als Behälteroberteilen 12 fungierenden Behälterdeckeln der Behälter 11 wird bspw. mit einer Vorrichtung 10 ausgeführt, wie sie in n den Fig. 5 bis 7 dargestellt ist, und zwar unter Verwendung einer Handhabe, wie sie in den Fig. 3 und 4 dargestellt ist.

Die Vorrichtung 10 umfaßt im wesentlichen eine Spritzgußform 15, die aus einem Spritzgußformoberteil 150 und einem Spritzgußformunterteil 151 besteht, wie sie in den Fig. 5 bis 7 dargestellt ist. Spritzgußformen dieser Art sind im Stand der Technik bezüglich ihres prinzipiellen Aufbaues und ihrer Funktion bekannt, so daß auf diese hier im einzelnen nur soweit eingegangen wird bzw. zu werden braucht, wie es für das Verständnis der Erfindung erforderlich ist.

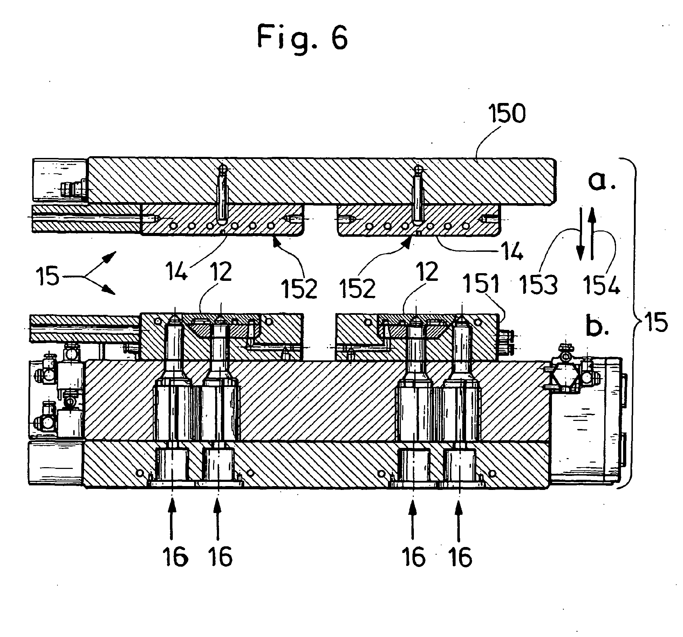

Von einem Bevorratungsort 17 aus, vgl. Fig. 3, an dem die Folie 12 in geeignet konturierter Form bereitgestellt wird, wird die Folie mittels einer Handhabe 18 in die Spritzgußform 15 bzw. auf das Spritzgußformoberteil 150 überführt und dort positioniert, vgl. Fig. 6a.. Sowohl am Ort der Bevorratung 17 der Folie 14 als auch während der Überführung der Folie 14 an den Positionierungsort 152 in dem Spritzgußformunterteil 151 wird die Folie 14 geeignet temperiert, bspw. im Bereich von 65° C bis 80° C, wenn der die Folie 14 bildende Werkstoff bspw. Polypropylen ist.

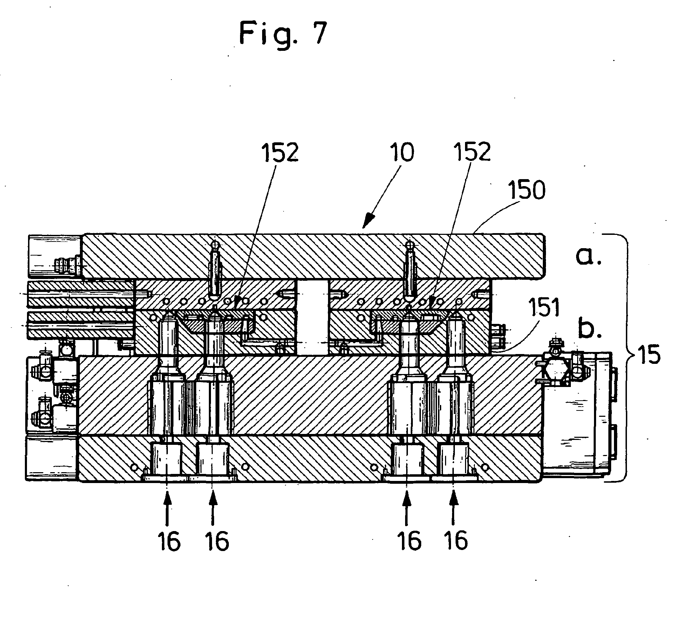

Nach dem Positionieren der Folie 14 am Positionierungsort 152 auf dem Spritzgußformoberteil 150 wird das Spritzgußformoberteil 150 auf das Spritzgußformunterteil 151 in Richtung des Pfeiles 153 bewegt, vgl. Fig. 6, bis das Spritzgußformoberteil 150 und das Spritzgußformunterteil 151 aufeinanderliegen, vgl. Fig. 7. Es ist grundsätzlich aber auch möglich, daß die Folie auf dem Spritzgußformunterteil 151, d.h. unmittelbar auf dem Bereich der Mulde positioniert wird, in der der Behälterdeckel bildende Werkstoff gespritzt wird.

Danach wird auf an sich bekannte Weise Kunststoffwerkstoff 16 durch entsprechende Öffnungen im Spritzgußformunterteil 151 in eine das spätere Behälteroberteil 12 bzw. den Behälterdeckel bildende Mulde, die im Spritzgußformunterteil 151 ausgebildet ist, bei Temperaturen zwischen 230 bis 240° C (bei Polypropylen als den Behälterdeckel bildender Werkstoff) gespritzt. Die Folie 14 wird dabei durch den das Behälteroberteil 12 bildenden Kunststoffwerkstoff 16 verbunden. Diese Verbindungsmethode wird mit "In Mold Labeling", kurz IML-Technik, bezeichnet. Nach dem Abschließen des Spritzgießvorganges kann das Spritzgußformoberteil 150 in Richtung des Pfeiles 154 geöffnet werden und das Behälteroberteil 12, das mit der Folie 14 dann einen Verbund bildet, entnommen werden und einem Vorrat bzw. einer weiteren Bearbeitung, falls erforderlich, zugeführt werden.

Die Temperierung der Folie 14 in der Spritzgußform 15 kann sowohl im Spritzgußformoberteil 150 als auch im Spritzgußformunterteil 151 mittels flüssiger und/oder gasförmiger, geeignet temperierter Medien erfolgen, es kann aber auch eine elektrische Temperierung durchgeführt werden. Da die Techniken zum Temperieren von Spritzgußformen an sich im Stand der Technik bekannt sind, ist ein weiteres Eingehen darauf nicht erforderlich.

Die Handhabe 18, vgl. die Fig. 3 und 4, weist Löcher 118 auf, über die geeignet temperierte Luft auf die Folie 14 gelangen kann, die mit der Handhabe 18 vom besagten Bevorratungsort 17 auf den Positionierungsort 152 in der Spritzgußform 15 überführt wird. Während dieser Überführung wird die Folie 14 schon auf einer geeigneten Temperatur gehalten, wie sie für die Temperatur am Positionierungsort 152 in der Spritzgußform 15 gewünscht bzw. erforderlich ist.

In den Fig. 3 und 4 sind in der Handhabe 18 lediglich 2 Löcher dargestellt. Es ist aber auch möglich, noch mehr Löcher in Abhängigkeit der Größe der Folie 14 vorzusehen, um auch bei großflächigen Folien 14 eine geeignete gleichmäßige Temperierung der Folie 14 über die ganze Fläche zu erreichen. Anstelle warmer Luft kann die Folie 14 bei ihrem Transport zum Positionierungsort 152 auch indirekt mittels flüssiger Medien oder mittels elektrischer Temperierungsmittel geeignet temperiert werden. Die beispielhaft an den Ecken in der Handhabe 18 angeordneten Löcher 181 dienen der Erzeugung eines gegenüber dem Umgebungsdruck geringfügigen Unterdrucks, wenn die Folie 14 auf der entsprechenden Transportfläche 182 der Handhabe 18 aufliegt. Durch den Unterdruck wird die Folie 14 auf der Transportfläche 182 während der Überführung vom Bevorratungsort 17 auf den Positionierungsort 152 in der Spritzgußform 15 gehalten. Am Positionierungsort 152 wird dann der Unterdruck abgebaut und in einen geringfügigen Überdruck gewandelt, so daß die Folie 14 in der Spritzgußform 15 bzw. auf dem Spritzgußformoberteil 150, oder ggf. auch im Spritzgußformunterteil 151, ordnungsgemäß positioniert werden kann.

### Bezugszeichenliste

- 10: Vorrichtung
- 11: Behälter
- 12: Behälteroberteil / Behälterdeckel
- 13: Behälterunterteil
- 14: Folie
- 15: Spritzgußform
- 150: Spritzgußformoberteil
- 151: Spritzgußformunterteil
- 152: Positionierungsort
- 153: Pfeil
- 154: Pfeil
- 16: Kunststoffwerkstoff
- 17: Bevorratungsort / Vorrat
- 18: Handhabe
- 180: Loch
- 181: Loch
- 182: Transportoberfläche

## Patentansprüche

1. Verfahren zur Herstellung von insbesondere als Behälterdeckel fungierenden Behälteroberteilen (12) von Behältern (11) für feste, pastöse sowie fließ- und schüttfähige Produkte, insbesondere für Lebensmittelprodukte, wobei auf dem Behälteroberteil (12) eine Folie (14) angebracht ist und wobei wenigstens das Behälteroberteil (12) aus einem Kunststoffwerkstoff besteht und die Verbindung zwischen dem Behälteroberteil (12) und der Folie (14) durch den das Behälteroberteil (12) bildenden plastifizierbaren Kunststoffwerkstoff (16) im Zuge seines Einspritzens in eine Spritzgußform (15) erfolgt, **dadurch** gekennzeichet, daß die Folie (14) beim Positionieren in der Spritzgußform (15) derart temperiert ist, daß der Temperaturgradient zwischen dem Kunststoffwerkstoff (16) des Behälteroberteils (12) und der Folie (14) in der Spritzgußform (15) minimiert gehalten wird.

2. Verfahren nach Anspruch 1, **dadurch gekennzeichnet, daß** die Folie (14) bei ihrer Überführung vom Ort ihrer Bevorratung (17) und/oder Herstellung in den Positionierungsort (152) in der Spritzgußform (15) temperiert wird.

3. Verfahren nach einem oder beiden der Ansprüche 1 oder 2, **dadurch gekennzeichnet, daß** die Temperierung mittels Zufuhr von Wärme erfolgt.

4. Verfahren nach einem oder mehreren der Ansprüche 1 bis 3, **dadurch gekennzeichnet, daß** die Folie (14) im Zuge der Ausbildung der Verbindung mit dem Behälteroberteil (12) in der Spritzgußform (15) temperiert wird.

5. Verfahren nach einem oder mehreren der Ansprüche 1 bis 4, **dadurch gekennzeichnet, daß** die Folie (14) auf dem Behälteroberteil (12) derart angebracht ist, daß diese zum Öffnen des mit dem Behälteroberteil (12) verschlossenen Behälterunterteils (13) vom Behälterunterteil (13) ablösbar ist.

6. Verfahren nach einem oder mehreren der Ansprüche 1 bis 5, **dadurch gekennzeichnet, daß** der das Behälteroberteil (12) bildende Werkstoff Polypropylen ist.

7. Verfahren nach einem oder mehreren der Ansprüche 1 bis 6, **dadurch gekennzeichnet, daß** die Temperatur der Spritzgußform (15) bei der Ausführung des Spritzgußvorganges des Behälteroberteils (12) und seiner Verbindung mit der Folie (14) im Bereich von 65° C gehalten wird.

8. Verfahren nach einem oder mehreren der Ansprüche 2 bis 7, **dadurch gekennzeichnet, daß** die Temperatur einer Handhabe (18), mittels der die Überführung der Folie (14) in die Spritzgußform (15) bewirkt wird, auf einer Temperatur im Bereich von 80° C gehalten wird.

9. Verfahren nach Anspruch 8, **dadurch gekennzeichnet, daß** die Folie (14) bei der Überführung mit der Handhabe (18) mittels temperierter Luft beaufschlagt wird.

10. Verfahren nach einem oder mehreren der Ansprüche 1 bis 9, **dadurch gekennzeichnet, daß** die Temperatur des plastifizierten, das Behälteroberteil (12) bildenden Kunststoffwerkstoffs (16) im Bereich von 230 bis 240° C gehalten wird.

11. Verfahren nach einem oder mehreren der Ansprüche 1 bis 10, **dadurch gekennzeichnet, daß** ein Vorrat an einem Bevorratungsort (17), mittels dem die Folien (14) bereitgestellt werden, temperiert wird.

## Claims

1. Method of producing container top parts (12) serving as container lids for containers (11) for solid, pasty as well as liquid and pourable products, in particular for food products, whereby a foil (14) is applied to the container top part (12) and at least the container top part (12) is made from a plastic material, and the container top part (12) is joined to the foil (14) by means of a plastic material (16) which can be plasticised during the course of an injection moulding process in an injection mould (14), **characterised in that** the foil (14) is heated as it is positioned in the injection mould (15) so that the temperature gradient between the plastic material (16) of the container top part (12) and the foil (14) in the injection mould (15) is kept to a minimum.

2. Method as claimed in claim 1, **characterised in that** the foil (14) is heated as it is transferred from the point (17) from where it is fed and/or produced to the point (152) at which it is positioned in the injection mould (15).

3. Method as claimed in one of the two claims 1 or 2, **characterised in that** heating is effected by applying heat.

4. Method as claimed in one or more of claims 1 to 3, **characterised in that** the foil (14) is heated in the injection mould (15) during the course of forming the join with the container top part (12).

5. Method as claimed in one or more of claims 1 to 4, **characterised in that** the foil (14) is applied to the container top part (12) in such a way that it can be detached from the container bottom part (13) in order to open the container bottom part (13) closed off by the container top part (12).

6. Method as claimed in one or more of claims 1 to 5, **characterised in that** the material from which the container top part (12) is made is polypropylene.

7. Method as claimed in one or more of claims 1 to 6, **characterised in that** the temperature of the injection mould (15) when running the process of injection moulding the container top part (12) and joining it to the foil (14) is kept in the region of 65°C.

8. Method as claimed in one or more of claims 2 to 7, **characterised in that** the temperature of a manipulating means (18) by means of which the foil (14) is transferred into the injection mould (15) is kept to a temperature in the region of 80°C.

9. Method as claimed in claim 8, **characterised in that** the foil (14) is exposed to heated air as it is transferred by means of the manipulating means (18).

10. Method as claimed in one or more of claims 1 to 9, **characterised in that** the temperature of the plasticised plastic material (16) forming the container top part (12) is maintained within the range of from 230 to 240°C.

11. Method as claimed in or more of claims 1 to 10, **characterised in that** a supply from which the foils (14) are made is heated at a supply point (17).

## Revendications

1. Procédé de fabrication d'éléments supérieurs de récipient (12) servant en particulier de couvercle de récipient pour récipients (11) à produits solides pâteux ainsi que liquides ou en vrac, destinés particulièrement aux produits alimentaires, un film (14) étant positionné sur la partie supérieure du récipient (12) et au moins la partie supérieure du récipient (12) étant fabriquée en matériau plastique et la jonction entre la partie supérieure du récipient (12) et le film (14) étant réalisée par le matériau plastique plastifiable (16) constituant la partie supérieure du récipient (12) au cours de son injection dans un moule pour coulage par injection (15), **caractérisé en ce que** le film (14) est équilibré en température de telle sorte que, lors du positionnement dans le moule pour coulage par injection (15), le gradient de température entre le matériau plastique (16) de la partie supérieure du récipient (12) et le film (14) est maintenu minimal dans le moule pour coulage par injection (15).

2. Procédé selon la revendication 1, **caractérisé en ce que** le film (14) est équilibré en température au cours de son transfert sur ses lieux de stockage (17) et/ou de fabrication sur le lieu de positionnement (152) dans le moule pour moulage par injection (15).

3. Procédé selon l'une quelconque des deux revendications 1 et 2, **caractérisé en ce que** l'équilibrage des températures est effectué par adduction de chaleur.

4. Procédé selon l'une quelconque des revendications 1 à 3, **caractérisé en ce que** le film (14) est équilibré en température au cours de la formation de la jonction avec la partie supérieure du récipient (12) dans le moule pour moulage par injection (15).

5. Procédé selon l'une quelconque des revendications 1 à 4, **caractérisé en ce que** le film (14) est positionné sur la partie supérieure du récipient (12), de manière à pouvoir être défait pour l'ouverture de la partie inférieure du récipient (13) qui est fermée par la partie supérieure du récipient (12).

6. Procédé selon l'une quelconque des revendications 1 à 5, **caractérisé en ce que** le matériau constituant la partie supérieure du récipient (12) est du polypropylène.

7. Procédé selon l'une quelconque des revendications 1 à 6, **caractérisé en ce que** la température du moule pour moulage par injection (15), lors de l'exécution du processus de moulage par injection de la partie supérieure du récipient (12) et sa jonction avec le film (14), est maintenue à une tepérature de l'ordre de 65 °C.

8. Procédé selon l'une quelconque des revendications 2 à 7, **caractérisé en ce que** la température d'une manette (18), au moyen de laquelle est réalisé le transfert du film (14) dans le moule pour moulage par injection (15), est maintenue à une température de l'ordre de 80 °C.

9. Procédé selon la revendication 8, **caractérisé en ce que** le film (14) est soumis à un air tempéré lors du transfert au moyen de la manette (18).

10. Procédé selon l'une quelconque des revendications 1 à 9, **caractérisé en ce que** la température du matériau plastique (16) plastifiable constituant la partie supérieure du récipient (12) est maintenue dans une zone allant de 230 à 240 °C.

11. Procédé selon l'une quelconque des revendications 1 à 10, **caractérisé en ce qu'**un stock situé sur un lieu de stockage (17), au moyen duquel les films (14) sont mis à disposition, est tempéré.
